# EUROPÄISCHE PATENTSCHRIFT

(11) **EP 0 968 864 B1**
(45) Veröffentlichungstag und Bekanntmachung des Hinweises auf die Patenterteilung: **04.10.2001**
(21) Anmeldenummer: 98112064.5
(22) Anmeldetag: 30.06.1998
(51) Int. Cl.: B60J 7/12, F16B 5/04

(54) **Verfahren zum Befestigen einer Fassungsschiene sowie Verbindungseinrichtung für eine Fassungsschiene**
Fixation method for holding profile and connection device for such holding profile
Procedé pour la fixation d'un profilé de support et dispositif pour la fixation de ce profilé de support

(43) Veröffentlichungstag der Anmeldung: 05.01.2000
(73) Patentinhaber: Dura Convertible Systems GmbH, 50735 Köln (DE)
(72) Erfinder: Mac Farland ,David,Dipl.-Ing., 85716 Unterschleissheim (DE)
(74) Vertreter: Strobel, Wolfgang, Dipl.-Ing.

(56) Entgegenhaltungen:
- DE-A- 2 707 291
- US-A- 3 563 183
- US-A- 4 746 163

## Beschreibung

Die vorliegende Erfindung betrifft ein Verfahren zum Befestigen einer Fassungsschiene an einem gegebenenfalls zumindest teilweise vormontierten Gestänge eines Verdecks für ein Fahrzeug, insbesondere für ein Cabriolet. Weiterhin betrifft die vorliegende Erfindung eine Verbindungseinrichtung für eine Fassungsschiene, zur Verbindung mit einem gegebenenfalls zumindest teilweise vormontierten Gestänge eines Verdecks für ein Fahrzeug, insbesondere für ein Cabriolet.

Bei Verdecken, insbesondere Kraftfahrzeugverdecken besteht das Problem, diese dichtend mit den entsprechenden Randabschnitten des Kraftfahrzeugs bei Schließen des Verdecks zu bringen und dort dauerhaft dichtend zu halten.

Hierzu wurden Dichtungssysteme entwickelt, bei denen entsprechende Dichtlippen von sogenannten Fassungsschienen aufgenommen werden. Die Fassungsschienen sind längliche C-förmige Elemente, wobei die Öffnung des C zur Aufnahme von Dichtungselementen, insbesondere länglichen Dichtungssträngen dient. Ein dearbijes Dichtungs system ist beispiels weise aus der US-A-4746 163 bekannt.

Dabei ergeben sich bei der auch aus diesem Stand der Technik bekannten herkömmlichen einfachen Montage, nämlich dem Anschrauben der Fassungsschiene an entsprechende Elemente des Verdeckgestänges, Probleme hinsichtlich der definierten Lage. Da die Toleranzen des Gestänges bzw. deren Lage einen gewissen Spielraum zulassen, muß die Lage der Fassungsschiene entsprechend nachjustiert werden bzw. nachträglich nach Einbau des Gestänges wieder verändert werden, damit eine exakte Dichtwirkung erzielt wird. Die Abstandsanpassung von Fassungsschiene und Gestänge erfolgt herkömmlicherweise durch Einsetzen von Distanzscheiben. Diese Vorgehensweise ist nicht nur umständlich, sondern auch äußerst arbeitsintensiv, was den Produktionsprozeß erheblich verteuert. Zudem ist durch die Einstellung von Hand die vorgesehene Lage nicht immer zuverlässig erreichbar, was dann zu Undichtigkeitsproblemen führt.

Der vorliegenden Erfindung liegt deshalb die Aufgabe zugrunde, ein Verfahren zum Befestigen einer Fassungsschiene an einem gegebenenfalls zumindest teilweise vormontierten Gestänge eines Verdecks für ein Fahrzeug, insbesondere für ein Cabriolet zu schaffen, mit dem auf einfache Weise eine definierte Lagesicherung erreicht wird, wodurch auftretende Toleranzspiele kompensiert werden können.

Weiterhin liegt der vorliegenden Erfindung die Aufgabe zugrunde, eine Verbindungseinrichtung für eine Fassungsschiene zu schaffen.

Die Lösung dieser Aufgaben wird durch die Merkmale der Ansprüche 1 bzw. 5 erreicht.

Bei dem erfindungsgemäßen Verfahren wird durch das Loch in der Fassungsschiene ein hülsenförmiges Verbindungselement gesteckt, das wenigstens eine Anschlagfläche aufweist, die Fassungsschiene auf einem ersten Vorrichtungselement aufgenommen, das Gestänge auf einem zweiten Vorrichtungselement aufgenommen, wobei wenigstens ein Loch im Gestänge zur Aufnahme des hülsenförmigen Verbindungselements vorgesehen ist bzw. wird, von der einen Seite das hülsenförmige Verbindungselement in das Gestängeloch eingeführt und durch Einführen einer dornartigen Einrichtung von der anderen Seite im Gestängeloch fixiert, die Fassungsschiene bis zu einer vorbestimmten Lage an das Gestänge heranbewegt, wobei sich das wenigstens eine hülsenförmige Verbindungselement plastisch verformt und eine Verbindung zwischen Gestänge und Fassungsschiene schafft, und werden die beiden Vorrichtungselemente von der geschaffenen Verbindungsstelle gelöst.

Dadurch wird erreicht, daß eine Kompensierung möglicher Toleranzen soweit erreicht wird, daß sowohl das Gestänge in Verbindung mit dem Fahrzeug als auch die Fassungsschiene im Verhältnis zu den abzudichtenden Rändern exakt angeordnet werden können, wobei das Anordnen der Elemente an den richtigen Platz und das Verbinden in einem im wesentlichen voll automatischen Prozeß durchgeführt werden kann. Dies schafft erhebliche Vorteile hinsichtlich der Produktionsgeschwindigkeit einerseits und hinsichtlich der damit verbundenen Kosteneinsparung andererseits, wobei sich das erfindungsgemäße Verfahren insbesondere auch für die Produktion höherer Stückzahlen von Verdecken eignet.

Die plastische Verformung erfolgt vorteilhafter Weise im wesentlichen durch Stauchung der Hülse in ihrer Länge und Aufweitung eines Stirnrandbereichs.

Vorteilhafterweise ist das zweite Vorrichtungselement an einer lagegesicherten Aufnahmevorrichtung angebracht und ist das erste Vorrichtungselement bezüglich des zweiten Vorrichtungselements sowohl in horizontaler als auch vertikaler Richtung beweglich. Damit wird eine flexible Ansteuerung der richtigen Lagen sowohl des Gestänges als auch der Fassungsschiene ermöglicht. Einstellmöglichkeiten der Aufnahmevorrichtung können selbstverständlich vorgesehen werden.

Die Einstellung der richtigen Lage der einzelnen Elemente zueinander wird weiterhin dadurch unterstützt, daß das erste Vorrichtungselement bezüglich des zweiten Vorrichtungselements in eine definierte Endlage gebracht wird.

Weiterhin wird vorteilhafterweise das hülsenförmige Verbindungselement in ein Loch im Gestänge eingeführt, das einen etwas größeren Innendurchmesser als der Außendurchmesser des hülsenförmigen Verbindungselements aufweist, wodurch ein entsprechend leichtes Einführen des hülsenförmigen Elements in das Gestänge ermöglicht wird, bevor das hülsenförmige Element zur Schaffung der wirksamen Verbindungsstelle entsprechend plastisch verformt wird.

Die erfindungsgemäße Verbindungseinrichtung zeichnet sich dadurch aus, daß wenigstens ein hülsenförmiges Verbindungselement vorgesehen ist, das sich sowohl durch ein Loch in der Fassungsschiene als auch durch ein Loch im Gestänge erstreckt und zur Erzeugung der Verbindung durch Heranbewegen des fassungsschiene bis zu einer vorbestinntenlage an das Gestänge wenigstens teil-weise plastisch verformt ist. Damit kann auf einfachste Weise eine wirksame Verbindungsstelle geschaffen werden, wodurch zusätzlich bisher übliche Distanzelemente, wie Distanzscheiben usw. vermieden werden können. Die Verbindung kann somit mit einem einzigen Element bzw. mit einer einzigen Elementart geschaffen werden.

Vorteilhafterweise sind mehrere Verbindungselemente vorgesehen, die eine entsprechend wirksame Verbindung der gesamten Fassungsschiene mit dem Gestänge ermöglichen.

Vorteilhafterweise sind die Verbindungselemente sowohl in horizontaler als auch in vertikaler Richtung in der Fassungsschiene versetzt angeordnet. Dadurch können entsprechende Querkräfte und Seitenkräfte wirksam aufgenommen werden.

Vorteilhafterweise weist das hülsenförmige Verbindungselement einen Anschlagflansch an einer seiner Stirnseiten auf, wodurch eine definierte Stellung des Elements geschaffen wird.

Mit weiterem Vorteil weist das hülsenförmige Verbindungselement wenigstens eine Einkerbung von einer seiner Stirnseiten auf. Vorteilhafterweise ist das die andere Stirnseite zu jener, die den Anschlagflansch aufweist. In einer bevorzugten Ausführungsform weist das hülsenförmige Verbindungselement drei Einkerbungen auf, wodurch entsprechende zungenartige Elemente entstehen, die entsprechend leicht verformbar sind.

Das hülsenförmige Element ist vorteilhafterweise aus Metall gebildet, wodurch eine einfache und leichte Verformung erzeugt werden kann und eine entsprechend steife Verbindung zwischen Fassungsschiene und Gestänge erzeugt werden kann. Selbstverständlich ist es möglich, das hülsenförmige Verbindungselement aus anderen Materialien oder Materialkombinationen zu bilden, die in der Lage sind, eine entsprechende Verformung einzugehen, gegebenenfalls durch zusätzliche Erwärmung des hülsenförmigen Verbindungselements beim Anfahren in die Endstellung der Fassungsschiene gegenüber dem Gestänge.

Weitere Einzelheiten, Merkmale und Vorteile der vorliegenden Erfindung ergeben sich aus der nachfolgenden Beschreibung unter Bezugnahme auf die Zeichnungen. Darin zeigt:
- Figur 1: in perspektivischer Ansicht eine Fassungsschiene mit Löchern und Verbindungselementen zum Einsatz in diesen Löchern;
- Figur 2: eine Ausführungsform der erfindungsgemäßen Verbindungseinrichtung im Stadium vor dem Schaffen der Verbindungsstelle;
- Figur 3: die erfindungsgemäße Verbindungseinrichtung von Figur 2 im Stadium der gerade geschaffenen Verbindungsstelle und
- Figur 4: die geschaffene Verbindungsstelle von Figur 3 mit entfernten Vorrichtungselementen.

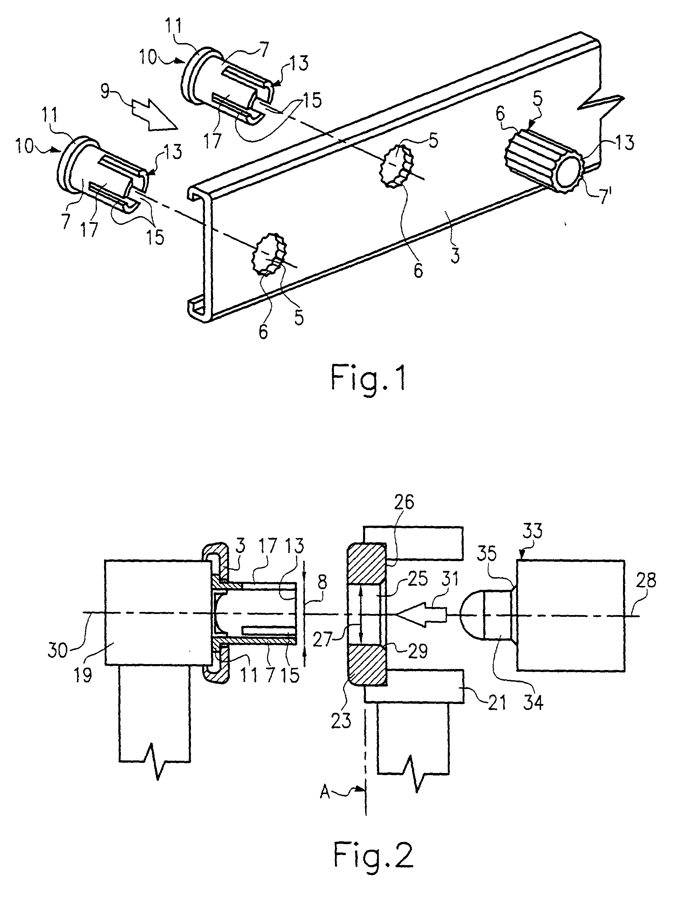

In Figur 1 ist in perspektivischer Ansicht eine Fassungsschiene 3 dargestellt, die, wie ersichtlich, ein C-förmiges Profil aufweist, wobei das C-förmige Profil nach hinten geöffnet ist.

In die Fassungsschiene 3, die abgeschnitten dargestellt ist, sind Durchbrüche oder Löcher 5 eingebracht, in die hülsenförmige Verbindungselemente 7 und 7' einsetzbar sind.

In der Darstellung gemäß Figur 1 sind zwei unterschiedliche Ausführungsformen eines hülsenförmigen Verbindungselements dargestellt. In die in Figur 1 dargestellten Löcher 5, die einen gezahnten Innenumfang 6 aufweisen, sind die hülsenförmigen Verbindungselemente 7 bzw. 7' gemäß Pfeil 9 einsetzbar. Durch den gezahnten Innenumfang 6 wird dem Außenumfang des hülsenförmigen Verbindungselements 7' eine ähnliche Struktur aufgeprägt, wodurch eine entsprechende Einsteckwirkung erreicht wird.

Die hülsenförmigen Verbindungselemente 7, 7' weisen an einer Stirnseite 10 einen Anschlagflansch 11 auf, der als Anschlag beim Einstecken des hülsenförmigen Verbindungselements 7, 7' gegen die Fassungsschiene 3 dient.

Von der anderen Stirnseite 13, die entgegengesetzt ist zur Stirnseite 10 sind Einkerbungen 15 vorgesehen, wobei im dargestellten Beispielsfalle der hülsenförmigen Verbindungselemente 7 drei Einkerbungen 15 vorgesehen sind, die sich in gleichem winkelmäßigen Abstand voneinander befinden.

Durch die Einkerbungen 15 werden zungenförmige Elemente 17 gebildet, die eine leichtere Verformung ermöglichen.

Die hülsenförmigen Verbindungselemente 7, 7' können beispielsweise aus Metall gebildet sein. Mögliche andere Materialien, die eine plastische Verformung unterstützen bzw. möglich machen, sind jedoch auch geeignet.

In den Figuren 2 bis 4 wird gezeigt, wie eine bevorzugte Ausführungsform des erfindungsgemäßen Verfahrens abläuft bzw. wie eine entsprechende Verbindungsstelle mit der erfindungsgemäßen Verbindungseinrichtung geschaffen wird.

Die Fassungsschiene 3 ist auf einem ersten Vorrichtungselement aufgebracht und lagegesichert. In die Fassungsschiene 3 sind die hülsenförmigen Verbindungselemente 7 oder auch 7' eingesetzt und mit ihrem jeweiligen Anschlagflansch 11 schlagen sie einerseits an der Fassungsschiene 3 und andererseits an der entsprechenden Seite des ersten Vorrichtungselements 19 an.

In einem zweiten Vorrichtungselement 21 ist ein Gestänge 23 aufgenommen, das im Beispielsfall ein schienenförmiges Element ist. In dem Gestänge 23 sind so viele Löcher 25 ausgebildet, wie hülsenförmige Verbindungselemente 7 vorgesehen werden sollen. Gegebenenfalls können auch noch mehr Löcher 25 vorgesehen werden, um je nach Ausführungsform des Verdecks bzw. des Gestänges verschiedene Auswahlmöglichkeiten für die Verbindungsstellen zu schaffen.

Die Löcher weisen einen Innendurchmesser 27 auf, der etwas größer ist als der Außendurchmesser 8 der hülsenförmigen Verbindungselemente 7, 7'.

Weiterhin weist das Loch bzw. die Löcher 25 eine sich nach außen aufweitende Anphasung 29 auf.

Gemäß Pfeil 31 wird eine dornartige Einrichtung 33 vorgesehen, die einen Dorn 34 aufweist, der in das Loch 25 einführbar ist.

Das gegebenenfalls vormontierte Gestänge 23 befindet sich in der Position gemäß Figur 2 an einer Bezugsebene A, die eine vorbestimmte Montagelage definiert.

Anhand der nachfolgenden Beschreibung, wird das erfindungsgemäße Verfahren dargestellt, von dem drei Momentaufnahmen in den Figuren 2 bis 4 dargestellt sind.

Ausgehend von den Stellungen des ersten Vorrichtungselements 19, des zweiten Vorrichtungselements 21 und der dornartigen Einrichtung 33, wird zunächst das hülsenförmige Verbindungselement 7 in das Loch 25 eingeführt, wobei bevorzugt die Stirnseite 13 bis zur hinteren Außenseite 26 bündig eingeführt wird.

Danach wird der Dorn 34 der dornartigen Einrichtung 33 in das Innere des hülsenförmigen Elements 7 eingeführt. Am Fuße des Dorns 34 befindet sich eine Kegelfläche 35, die so ausgestaltet ist, daß ihre Verjüngung der Anphasung 29 entspricht.

Durch Eingriff der Kegelfläche 35 in die Stirnseite 13 des hülsenförmigen Verbindungselements 7 bzw. 7' wird das hülsenförmige Verbindungselement 7 in diesem Bereich plastisch verformt und eine Lagesicherung an dieser Stelle erzeugt.

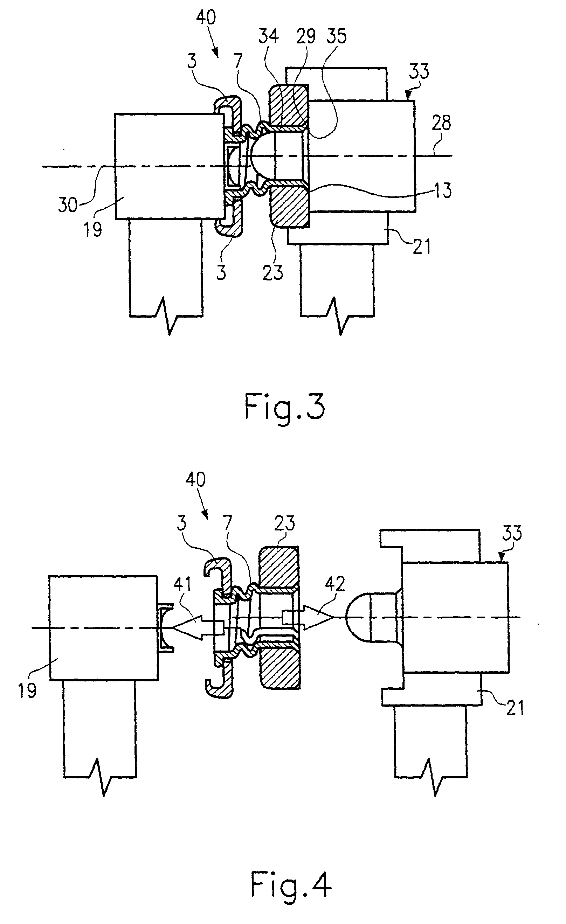

Zur Festlegung der endgültigen Lage der Fassungsschiene 3 gegenüber dem Gestänge 23 wird die Fassungsschiene durch das erste Vorrichtungselement in diese Lage bewegt, wobei gleichzeitig das hülsenförmige Verbindungselement 7 plastisch verformt wird, wie aus Figur 3 ersichtlich. Durch die plastische Verformung wird das hülsenförmige Verbindungselement 7 in seiner Lage vollständig festgelegt und eine Verbindungsstelle 40 geschaffen.

Wie aus Figur 3 ersichtlich weicht dabei die Achse 28 des Loches 25 von der Achse 30 des hülsenförmigen Verbindungselements 7 ab. Es hat somit eine Verschiebung gegenüber der Stellung gemäß Figur 2 stattgefunden und die Toleranzen in der Lage bzw. bei den einzelnen Komponenten sind kompensiert worden, so daß die definierte Endlage von Fassungsschiene 3 gegenüber Gestänge 23 erreicht wurde. Damit befindet sich das Gestänge in der richtigen Lage zur Verbindungsvorrichtung (nicht dargestellt) mit dem Fahrzeug und die Fassungsschiene in der richtigen Lage für eine optimale Dichtung beispielsweise mit den Seitenscheiben des Fahrzeugs.

In Figur 4 ist das Stadium dargestellt, in dem das erste Vorrichtungselement 19 gemäß Pfeil 41 von der Fassungsschiene nach links verschoben wurde und das zweite Vorrichtungselement 21 zusammen mit der dornartigen Einrichtung 33 gemäß Pfeil 42 nach rechts verschoben wurde und das Gestänge 23 freigegeben ist.

Die vorliegende Erfindung ist nicht auf die dargestellten Ausführungsbeispiele beschränkt. Beispielsweise können die hülsenförmigen Verbindungselemente auch eine andere Gestalt, beispielsweise statt Zylinderform prismatische Formen, Dreieckquerschnittsformen etc. aufweisen. Auch die Querschnittsform der Löcher 25 kann andere Gestalt aufweisen, beispielsweise kann die Anphasung 29 über den gesamten Innendurchmesser, dann entsprechend weniger schräg, verlaufen. Entsprechend angepaßt ist dann die Ausgestaltung des Dorns 34.

Die ersten und zweiten Vorrichtungselemente 19 und 21 sind auf entsprechenden Montagevorrichtungen angebracht, auf denen das Gestänge 23 mit den weiteren Elementen vormontiert sein kann. Die Darstellung gemäß Figuren 2 bis 4 zeigen nur eine Seite des Gestänges mit Fassungsschiene. Entsprechend spiegelbildlich sind diese Vorrichtungen dann für die andere Seite entweder auf derselben Montagevorrichtung ausgebildet oder befinden sich auf einer vor- oder nachgeschalteten Vorrichtung.

Zur Erzielung der größten Zeitersparnis werden alle Verbindungsstellen 40 auf beiden Seiten des Verdecks gleichzeitig erzeugt.

## Patentansprüche

1. Verfahren zum Befestigen einer Fassungsschiene an einem gegebenenfalls zumindest teilweise vormontierten Gestänge (23) eines Verdecks für ein Cabriolet, bei dem
- die Fassungsschiene (3) mit wenigstens einem Loch (5) an einer vorbestimmten Stelle versehen wird,
**dadurch gekennzeichnet, daß**
- durch das Loch (5) ein hülsenförmiges Verbindungselement (7, 7') gesteckt wird, das wenigstens eine Anschlagfläche (11) aufweist,
- die Fassungsschiene (3) auf einem ersten Vorrichtungselement (19) aufgenommen wird,
- das Gestänge (23) auf einem zweiten Vorrichtungselement (21) aufgenommen wird, wobei wenigstens ein Loch (25) im Gestänge (23) zur Aufnahme des hülsenförmigen Verbindungselements (7, 7') vorgesehen ist,
- von der einen Seite das hülsenförmige Verbindungselement (7, 7') in das Gestängeloch (25) eingeführt wird und durch Einführen einer dornartigen Einrichtung (33) von der anderen Seite in seiner Lage im Gestängeloch 25 fixiert wird,
- die Fassungsschiene (3) bis zu einer vorbestimmten Lage an das Gestänge (23) heranbewegt wird, wobei sich das hülsenförmige Verbindungselement (7, 7') plastisch verformt und eine Verbindung zwischen Gestänge (23) und Fassungsschiene (3) schafft, und
- die beiden Vorrichtungselemente (19, 21) und die domartige Einrichtung (33) von der geschaffenen Verbindungsstelle (40) gelöst werden.

2. Verfahren nach Anspruch 1, **dadurch gekennzeichnet, daß** das zweite Vorrichtungselement (21) an einer lagegesicherten und lagedefinierten Aufnahmevorrichtung angebracht ist und das erste Vorrichtungselement (19) bezüglich des zweiten Vorrichtungselements (21) sowohl in horizontaler als auch vertikaler Richtung beweglich ist.

3. Verfahren nach Anspruch 2, **dadurch gekennzeichnet, daß** das erste Vorrichtungselement (19) bezüglich des zweiten Vorrichtungselements (21) in eine definierte Endlage gebracht wird.

4. Verfahren nach einem der Ansprüche 1 bis 3, **dadurch gekennzeichnet, daß** das hülsenförmige Verbindungselement (7, 7') in ein Loch (25) im Gestänge (23) eingeführt wird, das einen etwas größeren Innendurchmesser (27) als der Außendurchmesser (8) des hülsenförmigen Verbindungselements (7, 7') aufweist.

5. Verbindungseinrichtung für ein gegebenenfalls zumindest teilweise vormontiertes Gestänge (23) eines Verdecks für ein Cabriolet, bei dem zur Aufnahme einer Dichtung eine Fassungsschiene (3) vorgesehen ist, **dadurch gekennzeichnet, daß** wenigstens ein hülsenförmiges Verbindungselement (7, 7') vorgesehen ist, das sich sowohl durch ein Loch (5) in der Fassungsschiene (3) als auch durch ein Loch (25) im Gestänge (23) erstreckt und zur Erzeugung einer Verbindungsstelle das hülsenförmige Verbindungselement (7, 7') durch Heranbewegen der Fassungsschiene (3) bis zu einer vorbestimmten Lage an das Gestänge (23) wenigstens teilweise plastisch verformt ist.

6. Vorrichtung nach Anspruch 5, **dadurch gekennzeichnet, daß** mehrere Verbindungselemente (7, 7') vorgesehen sind.

7. Vorrichtung nach Anspruch 6, **dadurch gekennzeichnet, daß** die Verbindungselemente (7, 7') sowohl in horizontaler als auch in vertikaler Richtung der Fassungsschiene (3) zueinander versetzt angeordnet werden können.

8. Vorrichtung nach einem der Ansprüche 5 bis 7, **dadurch gekennzeichnet, daß** das hülsenförmige Verbindungselement (7, 7') einen Anschlagflansch (11) an einer seiner Stirnseiten (10) aufweist.

9. Vorrichtung nach einem der Ansprüche 5 bis 8, **dadurch gekennzeichnet, daß** das hülsenförmige Verbindungselement (7, 7') wenigstens eine Einkerbung (15) von einer seiner Stimseiten (13) her aufweist.

10. Vorrichtung nach einem der Ansprüche 5 bis 9, **dadurch gekennzeichnet, daß** das hülsenförmige Verbindungselement (7, 7') aus Metall gebildet ist.

## Claims

1. A process for the attachment of a mounting rail to a rod (23), which is at least partially premounted, if necessary, of a folding top for a convertible, in which the mounting rail (3) is provided with at least one hole (5) at a predetermined point,
**characterised in that**
a tubular connecting element (7, 7'), which has at least one stopping surface (11), is inserted through the hole (5),
the mounting rail (3) is mounted on a first installation element (19),
the rod (23) is mounted on a second installation element (21), whereby at least one hole (25) is provided in the rod (23) for the accommodation of the tubular connecting element (7, 7'),
the tubular connecting element (7, 7') is introduced into the hole (25) in the rod from the one side and is, by means of the insertion of a mandrel-like unit (33) from the other side, fixed in its position in the hole (25),
the mounting rail (3) is moved forward towards the rod (23) up to a predetermined position, whereby the tubular connecting element (7, 7') is plastically deformed and a connection between the rod (23) and the mounting rail (3) is provided, and
both of the installation elements (19, 21) and the mandrel-like unit (33) are detached from the connection point (40) which is thereby created.

2. A process in accordance with claim 1, **characterised in that** the second installation element (21) is attached to a mounting device which is secured in a defined position, and the first installation element (19) can be moved in relation to the second installation element (21), both in the horizontal direction as well as in the vertical direction.

3. A process in accordance with claim 2, **characterised in that** the first installation element (19) is brought into a defined final position relative to the second installation element (21).

4. A process in accordance with one of the claims 1 to 3, **characterised in that** the tubular connecting element (7, 7') is inserted into a hole (25) in the rod (23), which has a somewhat larger internal diameter (27) than the external diameter (8) of the tubular connecting element (7, 7').

5. A connecting device for a rod (23), which is at least partially premounted, if necessary, of a folding top for a convertible, in which a mounting rail (3) is provided for the accommodation of a sealing unit,
**characterised in that**
at least one tubular connecting element (7, 7') is provided that extends both through a hole (5) in the mounting rail (3) as well as through a hole (25) in the rod (23) and is, for the production of a connection point, at least partially plastically deformed, when the rail (3) is moved forward towards the rod (23) up to a predetermined position.

6. A device in accordance with claim 5, **characterised in that** several connecting elements (7, 7') are provided.

7. A device in accordance with claim 6, **characterised in that** the connecting elements (7, 7') can be positioned displaced to one another, both in the horizontal direction as well as in the vertical direction of the mounting rail (3).

8. A device in accordance with one of the claims 5 to 7, **characterised in that** the tubular connecting element (7, 7') has a stopping surface (11) on one of its frontal sides (10).

9. A device in accordance with one of the claims 5 to 8, **characterised in that** the tubular connecting element (7, 7') has at least one notch (15) on one of its frontal sides (13).

10. A device in accordance with one of the claims 5 to 9, **characterised in that** the tubular connecting element (7, 7') is formed from metal.

## Revendications

1. Procédé de fixation d'un rail de sertissage sur une tringle (23), le cas échéant au moins partiellement pré-montée, d'une capote pour un cabriolet, dans lequel
- le rail de sertissage (3) est pourvu d'au moins un trou (5) à un emplacement prédéterminé,
**caractérisé en ce que**
- un élément d'assemblage (7, 7') en forme de douille, qui présente au moins une surface de butée (11), est inséré à travers le trou (5),
- le rail de sertissage (3) est reçu sur un premier élément de dispositif (19),
- la tringle (23) est reçue sur un deuxième élément de dispositif (21), au moins un trou (25) étant prévu dans la tringle (23) pour recevoir l'élément d'assemblage (7, 7') en forme de douille,
- l'élément d'assemblage (7, 7') en forme de douille est inséré depuis un côté dans le trou (25) de la tringle et est fixé dans sa position dans le trou (25) de la tringle, par insertion, depuis l'autre côté, d'un dispositif analogue à un mandrin (33),
- le rail de sertissage (3) est déplacé vers la tringle (23) jusqu'à une position prédéterminée, l'élément d'assemblage (7, 7') en forme de douille subissant une déformation plastique et créant un assemblage entre la tringle (23) et le rail de sertissage (3), et
- les deux éléments de dispositif (19, 21) et le dispositif analogue à un mandrin (33) sont désolidarisés du point d'assemblage (40) créé.

2. Procédé selon la revendication 1, **caractérisé en ce que** le deuxième élément de dispositif (21) est monté sur un dispositif de réception immobilisé en position fixe et défini en position et que le premier élément de dispositif (19) est mobile par rapport au deuxième élément de dispositif (21) aussi bien en direction horizontale qu'en direction verticale.

3. Procédé selon la revendication 2, **caractérisé en ce que** le premier élément de dispositif (19) est amené dans. une position finale définie, par rapport au deuxième élément de dispositif (21).

4. Procédé selon l'une des revendications 1 à 3, **caractérisé en ce que** l'élément d'assemblage (7, 7') en forme de douille est introduit dans un trou (25) de la tringle (23), qui présente un diamètre intérieur (27) légèrement supérieur au diamètre extérieur (8) de l'élément d'assemblage (7, 7') en forme de douille.

5. Dispositif d'assemblage pour une tringle (23), le cas échant au moins partiellement pré-montée, d'une capote pour un cabriolet, dans lequel un rail de sertissage (3) est prévu pour recevoir un joint d'étanchéité, **caractérisé en ce qu'**au moins un élément d'assemblage (7, 7') en forme de douille est prévu, lequel s'étend aussi bien à travers un trou (5) dans le rail de sertissage (3) que à travers un trou (25) dans la tringle (23) et que, pour créer un point d'assemblage, l'élément d'assemblage (7, 7') en forme de douille est déformé plastiquement, au moins en partie, par déplacement du rail de guidage (3) vers la tringle (23) jusqu'à une position prédéterminée.

6. Dispositif selon la revendication 5, **caractérisé en ce que** plusieurs éléments d'assemblage (7, 7',) sont prévus.

7. Dispositif selon la revendication 6, **caractérisé en ce que** les éléments d'assemblage (7, 7') peuvent être disposés de manière décalée les uns par rapport aux autres, aussi bien en direction horizontale qu'en direction verticale du rail de sertissage (3).

8. Dispositif selon l'une des revendications 5 à 7, **caractérisé en ce que** l'élément d'assemblage (7, 7') en forme de douille présente une bride de butée (11), sur l'une de ses faces frontales (10).

9. Dispositif selon l'une des revendications 5 à 8, **caractérisé en ce que** l'élément d'assemblage (7, 7') en forme de douille présente au moins une rainure (15) depuis l'une de ses faces frontales (13).

10. Dispositif selon l'une des revendications 5 à 9, **caractérisé en ce que** l'élément d'assemblage (7, 7') en forme de douille est formé de métal.
